(19) Europäisches Patentamt
European Patent Office
Office européen des brevets

(11) **EP 3 095 315 B1**

(12) **EUROPÄISCHE PATENTSCHRIFT**

(45) Veröffentlichungstag und Bekanntmachung des Hinweises auf die Patenterteilung:
**28.03.2018 Patentblatt 2018/13**

(51) Int Cl.:
*A01D 43/073* (2006.01)   *A01D 90/12* (2006.01)
*A01D 43/08* (2006.01)   *A01D 90/02* (2006.01)

(21) Anmeldenummer: **16168883.3**

(22) Anmeldetag: **10.05.2016**

(54) **VERFAHREN UND STEUERUNGSEINRICHTUNG ZUM BETREIBEN EINES LANDWIRTSCHAFTLICHEN LADEWAGENS**

METHOD AND CONTROL DEVICE FOR OPERATING AN AGRICULTURAL LOADER WAGON

PROCÉDÉ ET DISPOSITIF DE COMMANDE DESTINÉS AU FONCTIONNEMENT D'UNE REMORQUE AUTOCHARGEUSE AGRICOLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2015 DE 102015108055**

(43) Veröffentlichungstag der Anmeldung:
**23.11.2016 Patentblatt 2016/47**

(73) Patentinhaber: **CLAAS Saulgau GmbH 88348 Bad Saulgau (DE)**

(72) Erfinder:
• **Jeninga, Jasper**
  **88214 Ravensburg (DE)**
• **Dirlewanger, Florian**
  **88348 Bad Saulgau (DE)**
• **Frank, Kornelius**
  **71287 Weissach (DE)**
• **Sauter, Stefan**
  **88529 Zwiefalten (DE)**
• **Pflanze, Sascha**
  **88348 Braunenweiler (DE)**

(56) Entgegenhaltungen:
EP-A1- 0 666 018    EP-A1- 2 020 174
DE-A1- 19 731 769    DE-A1-102008 002 006
US-A1- 2011 061 762    US-A1- 2012 200 697
US-A1- 2013 211 658    US-A1- 2014 284 118

EP 3 095 315 B1

**Beschreibung**

Die Erfindung betrifft ein Verfahren zum Betreiben eines landwirtschaftlichen Ladewagens nach dem Oberbegriff des Anspruchs 1. Des Weiteren betrifft die Erfindung eine Steuerungseinrichtung zum Betreiben eines landwirtschaftlichen Ladewagens.

US 2013/0 211 658 A1 offenbart ein System und ein Verfahren zum erleichterten Umladen landwirtschaftlichen Materials aus einem übergebenden Fahrzeug (z. B. einer fahrbaren Erntemaschine) auf ein übernehmendes Fahrzeug (z. B. Transportanhänger für Getreide). Um eine gleichmäßige Befüllhöhe oder Verteilung zu erreichen kann ein Ausrichtungsmodul während des Beladens regelmäßig oder periodisch den Zielbereich oder den mittleren Bereich des Behälters des übernehmenden Fahrzeugs anpassen, wobei der Füllstatus des landwirtschaftlichen Materials durch einen Füllstandsensor ermittelt wird. Die Füllstandsverteilung kann durch verteilt angeordnete piezoelektrische Massensensoren ermittelt werden. Aus US 2014/0 284 118 A1 ist ein Wiegesystem für ein mobiles landwirtschaftliches Arbeitsgerät bekannt, um Überlast- und/oder Überschlagbedingungen für ein mobiles Betriebsgerät zu erkennen. Das Gewicht kann mit einer Vielzahl von Gewichts- oder Wägezellensensoren überwacht werden, die über das landwirtschaftliche Arbeitsgerät, beispielsweise einen Wagen verteilt angeordnet sind und eine Gewichtsverteilung von landwirtschaftlichem oder anderem Material im Wagen ermitteln.

Landwirtschaftliche Ladewagen mit einem Ladeaggregat zur Beladung des Ladewagens mit Erntegut wie zum Beispiel geschnittenem Gras, geschnittenem Heu oder geschnittenem Stroh sind allgemein bekannt. Ein solcher landwirtschaftlicher Ladewagen wird typischerweise von einem Zugfahrzeug wie einem Traktor gezogen, und zwar entlang eines zu einem Schwad auf einem Untergrund gesammelten Ernteguts.

Das Ladeaggregat eines solchen landwirtschaftlichen Ladewagens umfasst typischerweise eine Aufnahmeeinrichtung, eine Fördereinrichtung und eine Schneideinrichtung, wobei mit Hilfe der Aufnahmeeinrichtung des Ladeaggregats insbesondere bei Fortbewegung des Ladewagens entlang eines Schwads das Erntegut vom Untergrund aufnehmbar ist. Eine solche Aufnahmeeinrichtung wird auch als Pickup bezeichnet. Die Fördereinrichtung des Ladeaggregats dient der Förderung des mit Hilfe der Aufnahmeeinrichtung aufgenommenen Ernteguts in Richtung auf die Schneideinrichtung des Ladeaggregats, wobei die Fördereinrichtung auch als Rotor bezeichnet wird. Die Schneideeinrichtung des Ladeaggregats umfasst mehrere Schneidmesser, mit Hilfe derer das Erntegut zerkleinert werden kann.

Das mit Hilfe des Ladeaggregats des Ladewagens aufgenommene und zerkleinerte Erntegut ist in einen Laderaum des Ladewagens überführbar. Das Erntegut kann im Laderaum des Ladewagens in Richtung auf eine Entladeklappe weiter transportiert werden, vorzugsweise mit Hilfe einer sich entlang des Laderaums des Ladewagens erstreckenden, als Kratzboden ausgebildeten Transporteinrichtung des Ladewagens.

Ein landwirtschaftlicher Ladewagen weist zusätzlich zum Ladeaggregat und zur Transporteinrichtung eine Befüllklappe auf, die ebenso wie das Ladeaggregat in einem Frontbereich des Ladewagens positioniert ist. Während das Ladeaggregat in einem unteren Frontbereich des Ladewagens angeordnet ist, ist die Befüllklappe in einem oberen Frontbereich des Ladewagens positioniert. Während des Beladevorgangs des Ladewagens ist das Erntegut zur Verdichtung desselben gegen die Befüllklappe drückbar. Hierbei drückt dann während des Beladevorgangs des Ladewagens die Befüllklappe mit einer Kraft gegen das zerkleinerte Erntegut, um dasselbe zu verdichten.

Ein derartiger Ladewagen ist aus der DE 41 22 024 A1 bekannt. So verfügt der aus diesem Stand der Technik bekannte Ladewagen in einem unteren Frontbereich über ein Ladeaggregat, in einem oberen Frontbereich über eine Befüllklappe, die auch als Pressklappe bezeichnet wird, sowie über eine als Kratzboden ausgebildete Transporteinrichtung, mit Hilfe derer während des Beladevorgangs des Ladewagens das Erntegut zyklisch in Richtung auf die während des Beladevorgangs geschlossene Entladeklappe transportiert werden kann.

Aus dem Stand der Technik sind ferner Ladewagen bekannt, die nicht über ein Ladeaggregat des Ladewagens mit Erntegut beladen werden, sondern vielmehr ausgehend von einem Erntefahrzeug, insbesondere einem Feldhäcksler, der geerntetes Erntegut über einen Auswurfkrümmer unmittelbar in den Laderaum des Ladewagens füllt. Ein solcher Ladewagen ist aus der DE 10 2004 011 789 A1 bekannt, wobei nach diesem Stand der Technik das Erntefahrzeug eine Sensorvorrichtung aufweist, mit Hilfe derer ein Abstand zwischen dem landwirtschaftlichen Erntefahrzeug und dem Ladewagen ermittelt werden kann.

Unabhängig von der konkreten Ausführung des landwirtschaftlichen Ladewagens, also unabhängig davon, ob derselbe über ein Ladeaggregat zu einem Schwad gesammeltes Erntegut aufnimmt, oder ob derselbe ausgehend von einem Erntefahrzeug beladen wird, ist es wünschenswert, den sich ausbildenden Beladezustand des Wagens zu erfassen und abhängig hiervon den Beladevorgang vorzunehmen, um eine optimale Beladung des Wagens zu ermöglichen. Dies ist bislang nur in eingeschränktem Umfang möglich.

Es besteht daher Bedarf an einem Verfahren zum Betreiben eines landwirtschaftlichen Ladewagens oder Transportwagens und an einer Steuerungseinrichtung zur Durchführung des Verfahrens, mit Hilfe deren der Beladevorgang verbessert werden kann.

Hiervon ausgehend liegt der vorliegenden Erfindung die Aufgabe zugrunde, ein neuartiges Verfahren zum Betreiben eines landwirtschaftlichen Wagens und eine entsprechende Steuerungseinrichtung zu schaffen.

Diese Aufgabe wird durch ein Verfahren zum Betreiben eines landwirtschaftlichen Wagens nach Anspruch 1 gelöst. Erfindungsgemäß werden während des Beladevorgangs eine Masse des im Laderaum des Wagens aufgenommenen Ernteguts und eine Verteilung des Erntegutes im Laderaum des Wagens ermittelt, wobei abhängig hiervon die weitere Beladung des Wagens durchgeführt wird. Hiermit kann ein Wagen optimal beladen werden. Erfindungsgemäß wird aus der Masse des Ernteguts im Laderaum des Wagens und der Lage des sich ausbildenden Schwerpunkts desselben eine Ist-Beladeverteilung des Wagens zumindest über die Längsrichtung des Wagens ermittelt, wobei abhängig von der während des Beladevorgangs erfassten Masse des Ernteguts im Wagen und abhängig von der Lage des sich während des Beladevorgangs ausbildenden Schwerpunkts des Wagens der weitere Beladevorgang vorzugsweise derart automatisiert wird, dass die Ist-Beladeverteilung des Wagens einer Soll-Beladeverteilung desselben angenähert wird. Hiermit ist eine besonders vorteilhafte Beladung des Laderaums des Wagens möglich.

Nach einer vorteilhaften Weiterbildung wird zur automatisierten Durchführung der weiteren Beladung des Wagens mindestens ein Betriebsparameter des Wagens oder mindestens ein Betriebsparameter eines den Wagen beladenden Erntefahrzeugs angepasst. So kann eine Fahrgeschwindigkeit des Wagens angepasst und/oder eine Transporteinrichtung des Laderaums des Wagens angesteuert werden. Ferner kann eine Fahrgeschwindigkeit eines den Wagen beladenden Erntefahrzeugs angepasst und/oder ein Auswurfkrümmer des den Wagen beladenden Erntefahrzeugs angesteuert werden.

Abhängig vom konkreten Einsatz des Wagens, also abhängig davon, ob der Wagen über ein Ladeaggregat desselben oder ausgehend von einem Erntefahrzeug beladen wird, kann der Beladevorgang des Wagens gezielt beeinflusst werden, um eine optimale Beladung desselben zu ermöglichen.

Nach einer erfindungsgemäßen Weiterbildung werden die Masse des im Laderaum des Wagens aufgenommenen Ernteguts und die Lage des sich ausbildenden Schwerpunkts des Wagens aus Messsignalen von mindestens zwei Sensoren ermittelt, die zumindest über die Längsrichtung des Wagens verteilt angeordnet sind. Hiermit ist eine besonders einfache und zuverlässige Ermittlung der Masse des im Laderaum des Wagens aufgenommenen Ernteguts sowie zumindest der Längsrichtungslage bzw. Längsrichtungsposition des sich während des Beladevorgangs ausbildenden Schwerpunkts des Wagens möglich.

Aufgrund der bekannten Gesamtmasse und der Massezunahme über die Zeit kann der Zeitpunkt berechnet werden, zu dem der Wagen vollständig beladen ist. Mit Hilfe von weiteren Informationen, wie z.B. der Fahrgeschwindigkeit und der Fahrspur, kann zusätzlich auf die Position geschlossen werden, an welcher die Beladung des Wagens abgeschlossen ist. Diese Informationen können im Rahmen eines Flottenmanagementsystems dazu verwendet werden, um mehrere Abfuhrfahrzeuge miteinander zu koordinieren.

Die Steuerungseinrichtung zum Betreiben des landwirtschaftlichen Wagens ist in Anspruch 12 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

Fig. 1    ein landwirtschaftliches Zuggespann aus einem landwirtschaftlichen Ladewagen und einem landwirtschaftlichen Zugfahrzeug;

Fig. 2    ein weiteres landwirtschaftliches Zuggespann aus einem landwirtschaftlichen Transportwagen und einem landwirtschaftlichen Zugfahrzeug zusammen mit einem Erntefahrzeug, welches den landwirtschaftlichen Wagen belädt;

Fig. 3    ein Blockschaltbild zur weiteren Verdeutlichung der Erfindung;

Fig. 4    den Wagen aus Fig. 3 in einer Seitenansicht.

Die hier vorliegende Erfindung betrifft ein Verfahren und eine Steuerungseinrichtung zum Betreiben eines landwirtschaftlichen Wagens.

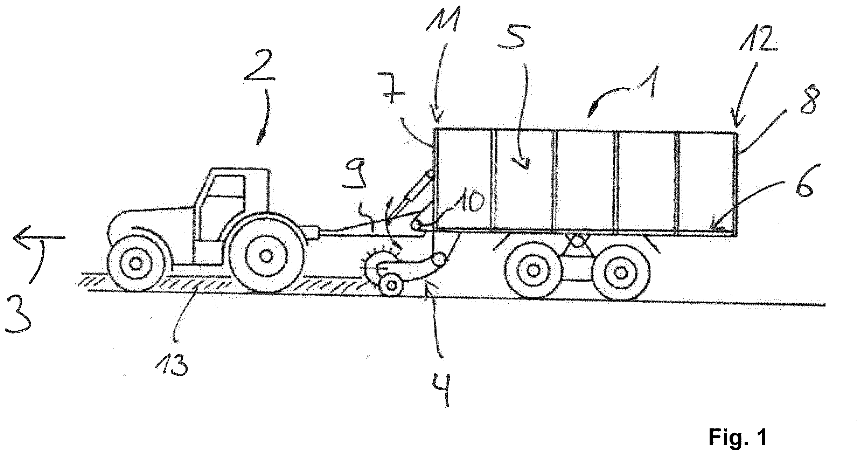

Fig. 1 zeigt den grundsätzlichen Aufbau eines landwirtschaftlichen Zuggespanns am Beispiel eines landwirtschaftlichen Ladewagens 1, der von einem landwirtschaftlichen Zugfahrzeug 2 gezogen wird. Der landwirtschaftliche Ladewagen 1 ist an das Zugfahrzeug 2 über eine Knickdeichsel 9 gekoppelt.

Zum Beladen des Ladewagens 1 mit Erntegut wird in der Variante der Fig. 1 der Ladewagen 1 von dem Zugfahrzeug 2 in Fahrtrichtung 3 entlang des zu einen Schwad 13 vereinigten Ernteguts gezogen, wobei ein Ladeaggregat 4 des Ladewagens 1 der Aufnahme des Ernteguts von einem Untergrund und der Beladung eines Laderaums 5 des Ladewagens 1 mit dem Erntegut dient. Das Ladeaggregat 4 des Ladewagens 1 ist in der Variante der Fig. 1 unten in einem Frontbereich 11 des Ladewagens 1 positioniert und umfasst eine Aufnahmeeinrichtung, die der Aufnahme des Ernteguts von einem Untergrund bzw. Boden dient. Diese Aufnahmeeinrichtung wird auch als Pickup bezeichnet. Ferner verfügt das Ladeaggregat 4 über eine Fördereinrichtung und eine Schneideinrichtung, wobei die Fördereinrichtung dem Transport des Ernteguts ausgehend von der Aufnahmeeinrichtung in Richtung auf die Schneideinrichtung dient. Im Bereich der Schneideinrichtung kann das Erntegut zerkleinert und als zerkleinertes Erntegut in den Laderaum 5 des Transportwagens 1 gefördert werden.

In der Variante der Fig. 1 dient zur Weiterbeförderung des aufgenommenen und zerkleinerten Ernteguts im Laderaum 5 eine Transporteinrichtung 6, die vorzugsweise als Kratzboden ausgeführt ist. Der Kratzboden verfügt typischerweise über Gliederketten und Transportleisten, um das über das Ladeaggregat 4 unten im Frontbereich 11 benachbart zu einer Vorderwand 7 des Ladewagens 1 aufgenommene Erntegut in Richtung auf einen Heckbereich 12 bzw. in Richtung auf eine Entladeklappe 8 des Ladewagens 1 zu transportieren. Während das Ladeaggregat 4 ausschließlich während eines Beladevorgangs des Ladewagens 1 aktiv ist, ist die Transporteinrichtung 6 während eines Beladevorgangs und eines Entladevorgangs aktiv. Während eines Beladevorgangs dient die Transporteinrichtung 6, die vorzugsweise als Kratzboden ausgeführt ist, dem Transport des Ernteguts in Richtung auf die geschlossene Entladeklappe 8. Während eines Entladevorgangs dient die Transporteinrichtung 6 dem Transport des Ernteguts in Richtung auf die geöffnete Entladeklappe 8.

Der Ladewagen 1 verfügt vorzugsweise weiterhin über eine im oberen Frontbereich 11 desselben positionierte, nicht gezeigte Befüllklappe. Die Befüllklappe ist um eine Achse schwenkbar bzw. verlagerbar. Die Befüllklappe kann dabei einen oberen Abschnitt der Vorderwand 7 des Ladewagens 1 bilden oder als von der Vorderwand 7 getrennte, separate Baugruppe ausgeführt sein.

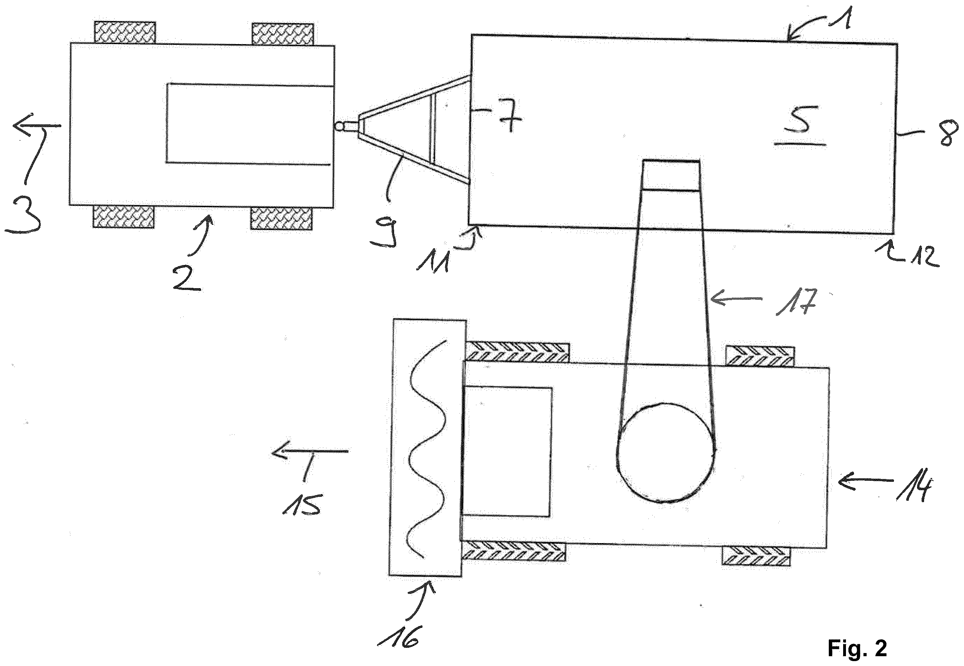

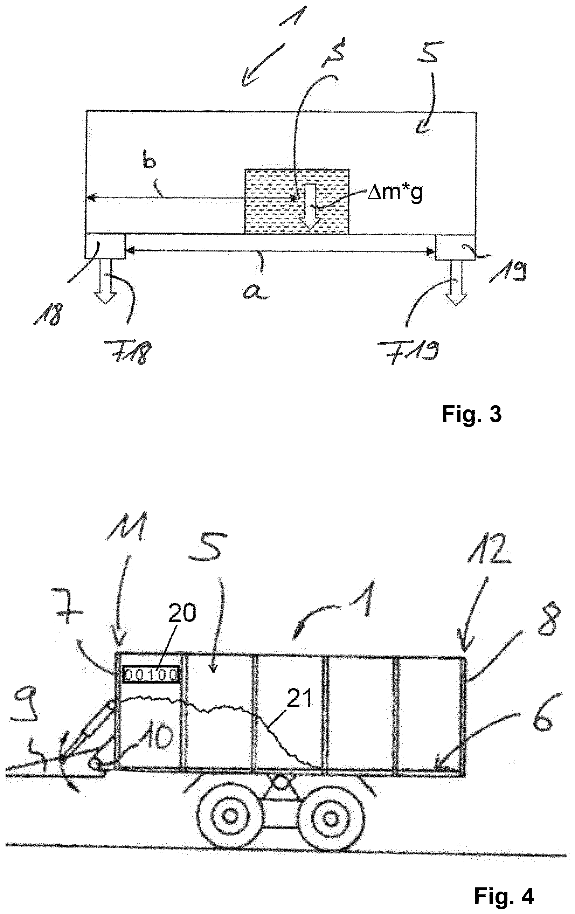

Fig. 2 zeigt ein weiteres landwirtschaftliches Zuggespann aus einem landwirtschaftlichen Transportwagen 1 und einem Zugfahrzeug 2, wobei der Wagen 1 vom Zugfahrzeug 2 in Fahrtrichtung 3 gezogen wird. Der Wagen 1 ist wiederum über eine Knickdeichsel 9 mit dem Zugfahrzeug 2 gekoppelt, wobei der Laderaum 5 des Wagens 1 von einer im Frontbereich 11 positionierten Vorderwand 7 und einem Heckbereich 12 positionierten Entladeklappe 8 begrenzt wird. In der Variante der Fig. 4 wird der Wagen 1 nicht dadurch beladen, dass, wie in Fig. 1 gezeigt, ein Ladeaggregat 4 zu einem Schwad 13 vereinigtes Erntegut in den Laderaum 5 des Wagens 1 fördert, vielmehr wird in Fig. 2 der Laderaum 5 des Wagens 1 ausgehend von einem landwirtschaftlichen Erntefahrzeug 14 beladen, welches in Fahrtrichtung 15 bewegt wird. Bei dem landwirtschaftlichen Erntefahrzeug 14 kann es sich zum Beispiel um einen Feldhäcksler mit einem sogenannten Maisgebiss 16 handeln, der das Erntegut mäht, häckselt und über einen Auswurfkrümmer 17 in Richtung auf den Laderaum 5 des Wagens 1 wirft, um so den Laderaum 5 des Wagens 1 unmittelbar zu beladen. Ein solcher Wagen gemäß Fig. 2 wird auch als Häckseltransportwagen bezeichnet.

Die hier vorliegende Erfindung betrifft nun solche Details, mit Hilfe deren der Laderaum 5 eines Wagens 1, sei es der des Ladewagens 1 der Fig. 1 oder des Transportwagens 1 der Fig. 2, optimal beladen werden kann.

Im Sinne der hier vorliegenden Erfindung ist vorgesehen, dass während des Beladevorgangs des Wagens 1 eine Masse des im Laderaum 5 des Wagens 1 aufgenommenen Ernteguts sowie eine sich während des Beladevorgangs ausbildende Ladungsverteilung im Laderaum 5 des Wagens 1 ermittelt werden. Dabei kann die Ermittlung der Masse des Ernteguts im Laderaum 5 des Ladewagens 1 sowie die Ermittlung der Ladungsverteilung während des Beladevorgangs kontinuierlich oder diskontinuierlich bzw. zyklisch in definierten Zeitabständen erfolgen.

Abhängig von diesen ermittelten Größen, also abhängig von der während des Beladevorgangs im Laderaum 5 des Wagens 1 aufgenommenen Erntegutmasse sowie abhängig von deren Verteilung im Laderaum 5 des Wagens wird die weitere Beladung bzw. der weitere Beladevorgang des Wagens 1 durchgeführt bzw. angepasst, um so eine optimale Beladung des Wagens 1 zu gewährleisten. Dies kann teilautomatisch oder auch vollautomatisch erfolgen.

Die Ermittlung der Masse $\Delta m$ des im Laderaum 5 des Wagens 1 aufgenommenen Ernteguts sowie die Ermittlung der Lage des Schwerpunkts der aufgenommenen (Erntegut-)Masse $\Delta m$ im Wagen erfolgen vorzugsweise auf Basis von Messsignalen von mindestens zwei dem Wagen 1 zugeordneten Sensoren. So zeigt Fig. 3 zwei Sensoren 18, 19, die über die Längsrichtung des Wagens 1 verteilt angeordnet sind, wobei diese Sensoren 18, 19 einen definierten Abstand a in Längsrichtung des Wagens aufweisen.

Der Sensor 18 stellt ein erstes von der Masse des Wagens abhängiges Messsignal F18 und der zweite Sensor 19 stellt ein zweites von der Masse des Wagens abhängiges Messsignal F19 bereit, wobei eine Massezunahme $\Delta m$ des Wagens, die der zwischen zwei Zeitpunkten zugeladenen Masse an Erntegut entspricht, wie folgt ermittelt werden kann:

$$\Delta m = (\Delta F18 + \Delta F19)/g,$$

wobei $\Delta m$ die Massezunahme an Erntegut im Laderaum 5 des Wagens zwischen zwei Zeitpunkten t1 und t2 ist, wobei $\Delta F18$ die Zunahme des Messsignals des als Kraftsensor ausgebildeten Sensors 18 zwischen diesen beiden Zeitpunkten ist, und wobei $\Delta F19$ die Zunahme des Messsignals des als Kraftsensor ausgebildeten Sensors 19 zwischen diesen Zeitpunkten ist, und wobei g die Erdbeschleunigung ist.

Aus den von den Sensoren 18 und 19 bereitgestellten Messsignalen F18 und F19 kann weiterhin die Lage des Schwerpunkts der aufgenommenen Masse $\Delta m$ in Längsrichtung bzw. dessen Abstand b zum Beispiel zur Position des Sensors 18 wie folgt bestimmt werden:

$$b = a * \Delta F19/(\Delta F18 + \Delta F19)$$

Wobei b die Lage S des Schwerpunkts der zugeladenen Masse $\Delta m$ als Abstand zum Sensor 18 beschreibt, und wobei a der Abstand der Sensoren 18, 19 in Längsrichtung des Wagens ist.

Wie bereits ausgeführt, sind die beiden Sensoren 18, 19 zumindest über die Längsrichtung des Wagens verteilt positioniert, um in Längsrichtung des Wagens 1 gesehen die Lage bzw. Position des Schwerpunkts desselben zu ermitteln. Zusätzlich ist es möglich, dass die Sensoren 18, 19 auch quer zur Längsrichtung des Wagens 1 gesehen zueinander versetzt sind, um dann auch die Lage bzw. Position des Schwerpunkts quer zur Längsrichtung des Wagens 1 zu bestimmen.

Wie bereits ausgeführt, erfolgt die Ermittlung der Masse des im Laderaum 5 des Wagens 1 aufgenommenen Ernteguts sowie deren Schwerpunktlage kontinuierlich oder diskontinuierlich während des Beladevorgangs, wobei insbesondere durch Aufsummieren bzw. Integrieren dieser (Teil-)Massen Δm und deren Relativposition bezüglich des Sensors 18 über der Zeit eine Ist-Beladeverteilung für den Wagen ermittelt werden kann, die sich während des Beladevorgangs des Wagens 1 ausbildet.

Die Ermittlung der Verteilung des Erntegutes im Laderaum kann einerseits auf Basis von variablen Massezunahmen Δm erfolgen, die während vorgebbaren konstanten Zeitintervallen zugeladen werden oder auf Basis einer vorgegebenen konstanten Massezunahme Δm, die in unterschiedlichen Zeitabständen zugeladen werden.

Wie ausgeführt, wird abhängig von der ermittelten Masse des in den Laderaum 5 aufgenommenen Ernteguts sowie abhängig von der ermittelten Erntegutverteilung, d.h. Ist-Beladeverteilung des Wagens 1 die weitere Beladung bzw. der weitere Beladevorgang des Wagens 1 durchgeführt, wobei hierzu die Ist-Beladeverteilung des Wagens 1 oder eine von der Ist-Beladeverteilung abhängige Größe oder eine die Ist-Beladeverteilung definierende Größe zumindest automatisch angezeigt wird. Im Ausführungsbeispiel der Fig. 1 kann die Ist-Beladeverteilung oder die die Ist-Beladeverteilung bestimmende bzw. die von derselben abhängige Größe zum Beispiel dem Fahrer des Zugfahrzeugs 2 angezeigt werden, damit derselbe seine Fahrgeschwindigkeit anpassen oder die Transporteinrichtung 6 des Ladewagens 1 aktivieren kann, um hierdurch den Beladevorgang zu beeinflussen.

Besonders bevorzugt ist vorgesehen, den Beladevorgang automatisch anzupassen, indem zum Beispiel im Ausführungsbeispiel der Fig. 1 durch eine Steuerungseinrichtung die Fahrgeschwindigkeit des Zugfahrzeugs 2 automatisch angepasst wird oder die Transporteinrichtung 6 des Ladewagens 1 automatisch angesteuert wird.

Im Ausführungsbeispiel der Fig. 2 ist es möglich, die Ist-Beladeverteilung des Ladewagens 1 bzw. diejenige Größe, welche die Ist-Beladeverteilung beeinflusst oder von derselben abhängig ist, dem Fahrer des Zugfahrzeugs 2 und/oder dem Fahrer des Erntefahrzeugs 14 anzuzeigen, damit der Fahrer des Zugfahrzeugs 2 und/oder der Fahrer des Erntefahrzeugs 14 seine Fahrgeschwindigkeit anpasst bzw. den Auswurfkrümmer 17 entsprechend ausrichtet. Diese Anpassung der Fahrgeschwindigkeit kann jedoch auch automatisch erfolgen, indem eine Steuerungseinrichtung abhängig von der Ist-Beladeverteilung die Fahrgeschwindigkeit des Zugfahrzeugs und/oder die Fahrgeschwindigkeit des Erntefahrzeugs 14 automatisch anpasst. Im Ausführungsbeispiel der Fig. 2 ist es weiterhin möglich, dass eine Steuerungseinrichtung automatisch abhängig von der ermittelten Masse des Ernteguts im Laderaum 5 sowie abhängig von der ermittelten Ist-Beladeverteilung des Wagens 1 den Auswurfkrümmer 17 des Erntefahrzeugs 14 automatisch ansteuert, um die Beladung des Wagens 1 bzw. den weiteren Verladevorgang desselben zu beeinflussen.

Vorzugsweise erfolgt die weitere Durchführung des Beladevorgangs des Wagens 1 abhängig von der ermittelten Masse des im Laderaum 5 aufgenommenen Ernteguts sowie abhängig von der ermittelten Verteilung des Ernteguts im Laderaum 5 des Wagens 1 automatisch, vorzugsweise derart, dass die sich ausbildende Ist-Beladeverteilung mit einer steuerungsseitig hinterlegten Soll-Beladeverteilung verglichen wird und abhängig von diesem Vergleich mindestens ein Betriebsparameter des Wagens 1 und/oder mindestens ein Betriebsparameter eines den Wagen 1 beladenden Erntefahrzeugs 14 automatisch angepasst wird, und zwar derart, dass die Ist-Beladeverteilung der Soll-Beladeverteilung angenähert wird bzw. derselben folgt. Dies ist für eine vollautomatische, optimale Beladung des Wagens 1 besonders vorteilhaft.

Die ermittelte Ist-Beladeverteilung des Wagens 1 oder die hiervon abhängige Größe oder die die Ist-Beladeverteilung bestimmende Größe kann an das Zugfahrzeug 2 des Wagens 1 und/oder an das den Wagen 1 beladende Erntefahrzeug 14 zum Beispiel über Funk übertragen werden, damit zum Beispiel für das Erntefahrzeug 14 mindestens einem Betriebsparameter automatisch angepasst werden kann.

Ebenso ist es möglich, die Ist-Beladeverteilung bzw. die hiervon abhängige bzw. korrespondierende Größe an einer Anzeigeeinrichtung des Wagens 1 optisch anzuzeigen und die Anzeige dieser Anzeigeeinrichtung mit Hilfe einer Kamera optisch zu erfassen, die dem Erntefahrzeug 14 zugeordnet ist.

Wie in Fig. 4 dargestellt, kann an einer Seitenwand des Wagens 1 eine Anzeige 20 angeordnet sein, welche z. B die Ist-Beladeverteilung 21 visualisiert oder angibt, wohin das Erntegut aktuell einzufüllen ist. Im dargestellten Beispiel ist der Laderaum 5 in fünf Abschnitte aufgeteilt, welche durch senkrechte Doppel-Linien veranschaulicht werden. Die Anzeige 20 ist vorzugsweise an einer für den Fahrer des Erntefahrzeugs gut einsehbaren Stelle angebracht und weist ebenfalls fünf Abschnitte auf. Im abgebildeten Ausführungsbeispiel kann die Anzeige in jedem Abschnitt eine Null oder eine Eins anzeigen, womit dem Fahrer des Erntefahrzeugs veranschaulicht wird, in welchen Abschnitt des Laderaums 5 er aktuell Erntegut einfüllen soll. Gemäß Fig. 4 wird dem Fahrer mit einer "Eins" im 3. bzw. mittleren Abschnitt der Anzeige 20 angezeigt, das Erntegut aktuell in den mittleren Abschnitt des Laderaums 5 einzufüllen.

Selbstverständlich kann diese Information zur Umsetzung einer Beladestrategie auch durch andere Zeichen oder Symbole visualisiert werden.

Es ist beispielsweise auch möglich, mit den Ziffern von Null bis Neun für leer bis voll den Ist-Beladezustand jedes Abschnitts zu veranschaulichen.

Selbstverständlich können mehrere Anzeigen 20 an verschiedenen Positionen des Wagens 1 vorgesehen werden.

Es kann vorgesehen werden, eine dem Erntefahrzeug zugeordnete Kamera so zu programmieren, dass diese die Anzeige 20 auswerten kann und die veranschaulichte Beladestrategie automatisiert umgesetzt wird.

Die Zurverfügungstellung der erfindungsgemäß ermittelten Masse des im Laderaum 5 des Wagens 1 aufgenommenen Ernteguts sowie der sich ausgebildeten Schwerpunktlage bzw. die Zurverfügungstellung der ermittelten Ist-Beladeverteilung des Wagens 1 oder der hiervon abhängigen bzw. der dieselbe bestimmenden Größe an das Zugfahrzeug und/oder an das Erntefahrzeug 14 kann nicht nur über Funk oder optisch über eine Kameraauswertung erfolgen, sondern auf jede beliebige Art und Weise einer geeigneten Datenübertragung.

Die Soll-Beladeverteilung, mit welcher die Ist-Beladeverteilung vorzugsweise zur automatischen Durchführung des weiteren Beladevorgangs des Wagens 1 verglichen wird, ist vorzugsweise von einer fahrerseitig gewählten Beladestrategie bzw. Befüllstrategie für den Wagen 1 abhängig.

So kann zum Beispiel nach einer ersten Beladestrategie vorgesehen sein, den Wagen 1 über seine Längsrichtung und ggf. Querrichtung gesehen möglichst gleichmäßig zu beladen.

Bei einer Fahrt in einer Steigung, insbesondere bei einer Bergabfahrt, kann nach einer zweiten Beladestrategie vorgesehen sein, zunächst möglichst viel Erntegut im Bereich einer Achse des Wagens 1 zu platzieren, um eine der Achse zugeordnete Bremse des Wagens 1 optimal nutzen zu können.

Nach einer weiteren Beladestrategie kann vorgesehen sein, den Wagen 1 zunächst möglichst weit vorne im Frontbereich 11 desselben zu beladen, um so die Traktion des Zugfahrzeugs 2 zu verbessern.

Die gewählte Beladestrategie für den Wagen 1 kann auch davon abhängen, ob eine möglichst erntegutschonende Beladung des Wagens 1 oder eine Belademasse maximierende Beladestrategie für den Wagen 1 fahrerseitig gewählt ist.

Sollte sich die aus der Beladestrategie resultierende Ladungsverteilung nicht einstellen, so wird dies durch den Vergleich der Lage des Ist-Schwerpunkts des Wagens 1 mit dem sich aus der Beladestrategie ergebenden Soll-Schwerpunkt erfasst, und es kann eine solche "Falsch"-Beladung korrigiert oder zumindest gegengesteuert werden.

Dazu kann dem Fahrer des Zugfahrzeugs 2 und/oder dem Fahrer des Erntefahrzeugs 14 angezeigt werden, wie er diejenige Größe, welche die Ist-Beladeverteilung beeinflusst einzustellen hat, damit der "Falsch"-Beladung gegengesteuert wird und sich der Ist-Schwerpunkt des Wagens 1 dem Soll-Schwerpunkt annähert. Die Anpassung dieser, die Ist-Beladeverteilung beeinflussenden, Größen kann selbstverständlich auch automatisch erfolgen.

Die Erfindung betrifft weiterhin eine Steuerungseinrichtung zur Durchführung des Verfahrens. Bei der Steuerungseinrichtung handelt es sich vorzugsweise um eine elektrische bzw. elektronische Steuerungseinrichtung, die Mittel zur Durchführung des Verfahrens aufweist. Bei diesen Mitteln handelt es sich um hardwareseitige Mittel und um softwareseitige Mittel. Zu den hardwareseitigen Mitteln zählen Datenschnittstellen, um mit den an der Durchführung des erfindungsgemäßen Verfahrens beteiligten Baugruppen, insbesondere mit den Sensoren 18, 19, Daten auszutauschen. Zu den hardwareseitigen Mitteln zählen weiterhin ein Speicher zur Datenspeicherung und ein Prozessor zur Datenverarbeitung. Zu den softwareseitigen Mitteln zählen Programmbausteine zur Durchführung des erfindungsgemäßen Verfahrens.

**Bezugszeichenliste**

| | |
|---|---|
| 1 | (Lade-, Häcksel-/Transport-)Wagen |
| 2 | Zugfahrzeug |
| 3 | Fahrtrichtung |
| 4 | Ladeaggregat |
| 5 | Laderaum |
| 6 | Transporteinrichtung |
| 7 | Vorderwand |
| 8 | Entladeklappe |
| 9 | Knickdeichsel |
| 10 | Achse |
| 11 | Frontbereich |
| 12 | Heckbereich |
| 13 | Schwad |
| 14 | Erntefahrzeug |
| 15 | Fahrtrichtung |
| 16 | Maisgebiss |
| 17 | Auswurfkrümmer |
| 18 | Sensor |
| 19 | Sensor |
| 20 | Anzeige |
| 21 | Ist-Beladeverteilung |

**Patentansprüche**

1. Verfahren zum Betreiben eines landwirtschaftlichen Wagens (1), wobei während eines Beladevorgangs des Wagens (1) ein Laderaum (5) des Wagens (1) mit Erntegut beladen wird, und während des Beladevorgangs eine Masse des im Laderaum (5) des Wagens (1) aufgenommenen Ernteguts und eine Verteilung des Ernteguts im Laderaum (5), d.h. eine Ist-Beladeverteilung (21), ermittelt werden, sowie abhängig hiervon die weitere Beladung des Ladewagens (1) durchgeführt wird, **dadurch gekennzeichnet, dass** aus der zwischen zwei Zeitpunkten t1 und t2 zugeladenen Masse (∆m) des Ernteguts im Laderaum (5) und der Lage des Schwerpunkts der zugeladenen Masse (∆m) die Ist-Beladeverteilung des Wagens (1) zumindest über die Längsrichtung des Wagens (1) ermittelt wird, indem die Masse (∆m) des im Laderaum (5) aufgenommenen Ernteguts sowie die Lage des sich ausbildenden Schwerpunkts der aufgenommenen Masse (∆m) aus Messsignalen von mindestens zwei Sensoren (17, 18) ermittelt werden, die zumindest über die Längsrichtung des Wagens (1) verteilt angeordnet sind und die Massen (∆m) sowie deren Relativposition bezüglich des einen Sensors (18) über der Zeit aufsummiert werden.

2. Verfahren nach Anspruch 1, **dadurch gekennzeichnet, dass** die Masse des Ernteguts im Laderaum (5) des Wagens (1) und die Verteilung des Ernteguts im Laderaum (5) während des Beladevorgangs zyklisch oder kontinuierlich erfasst werden.

3. Verfahren nach einem der Ansprüche 1 bis 2, **dadurch gekennzeichnet, dass** die Ist-Beladeverteilung des Wagens (1) oder eine von der Ist-Beladeverteilung abhängige bzw. eine dieselbe definierende Größe automatisch angezeigt wird.

4. Verfahren nach einem der Ansprüche 1 bis 3, **dadurch gekennzeichnet, dass** eine Anzeige (20) am Wagen (1) vorgesehen ist, mit welcher die Ist-Beladeverteilung (21) des Wagens (1) visualisierbar ist oder anzeigbar ist, in welchen Bereich des Laderaums (5) aktuell Erntegut eingefüllt werden soll.

5. Verfahren nach einem der Ansprüche 1 bis 4, **dadurch gekennzeichnet, dass** abhängig von der während des Beladevorgangs erfassten Masse des Ernteguts im Wagen (1) und abhängig von der Ist-Beladeverteilung (21) des Wagens (1) der weitere Beladevorgang angepasst wird.

6. Verfahren nach Anspruch 5, **dadurch gekennzeichnet, dass** der weitere Beladevorgang derart durchgeführt wird, dass eine Ist-Beladeverteilung (21) des Wagens (1) einer Soll-Beladeverteilung desselben angenähert wird.

7. Verfahren nach Anspruch 6, **dadurch gekennzeichnet, dass** die Soll-Beladeverteilung von einer gewählten Beladestrategie abhängig ist.

8. Verfahren nach einem der Ansprüche 5 bis 7, **dadurch gekennzeichnet, dass** hierzu mindestens ein Betriebsparameter des Wagens (1) oder mindestens ein Betriebsparameter eines den Wagen (1) beladenden Erntefahrzeugs (14) angepasst wird.

9. Verfahren nach Anspruch 7, **dadurch gekennzeichnet, dass** eine Fahrgeschwindigkeit des Wagens (1) angepasst und/oder eine Transporteinrichtung (6) des Laderaums (5) des Wagens (1) angesteuert wird.

10. Verfahren nach Anspruch 7 oder 8, **dadurch gekennzeichnet, dass** eine Fahrgeschwindigkeit eines den Wagen (1) beladenden Erntefahrzeugs (14) angepasst und/oder ein Auswurfkrümmer (17) des den Wagen (1) beladenden Erntefahrzeugs (14) angesteuert wird.

11. Steuerungseinrichtung zum Betreiben eines landwirtschaftlichen Wagens (1), **gekennzeichnet durch** Mittel zum Durchführen des Verfahrens nach einem der Ansprüche 1 bis 10.

## Claims

1. A method of operating an agricultural wagon (1), wherein a load space (5) of the wagon (1) is loaded with crop material during an operation of loading the wagon (1) and during the loading operation a mass of the crop material accommodated in the load space (5) of the wagon and a distribution of the crop material in the load space (5), that is to say an actual load distribution (21) are ascertained, and in dependence thereon further loading of the load wagon (1) is carried out, **characterised in that** the actual load distribution of the wagon (1) at least over the longitudinal direction of the wagon (1) is ascertained from the mass (∆m) of the crop material that is additionally loaded between two moments in time (t1 and t2) in the load space (5) and the position of the centre of gravity of the additionally loaded mass (∆m), by the mass (∆m) of the crop material accommodated in the load space (5) and the position of the centre of gravity which is produced in respect of the accommodated mass (∆m) being ascertained from measurement signals of at least two sensors (17, 18) which are arranged distributed at least over the longitudinal direction of the wagon (1) and the masses (∆m) and the relative position thereof with respect to the one sensor (18) are added up over time.

2. A method according to claim 1 **characterised in that** the mass of the crop material in the load space (5) of the wagon (1) and the distribution of the crop material in the load space (5) is cyclically or continuously ascertained during the loading operation.

**3.** A method according to one of claims 1 and 2 **characterised in that** the actual load distribution of the wagon (1) or a parameter which is dependent on the actual load distribution or a parameter which defines same is automatically displayed.

**4.** A method according to one of claims 1 to 3 **characterised in that** there is provided on the wagon (1) a display (20) with which the actual load distribution (21) of the wagon (1) can be visualised or it can be displayed in which region of the load space (5) crop material is currently to be introduced.

**5.** A method according to one of claims 1 to 4 **characterised in that** the further loading operation is adapted in dependence on the mass of the crop material in the wagon (1), that is ascertained during the loading operation, and in dependence on the actual load distribution (21) of the wagon (1).

**6.** A method according to claim 5 **characterised in that** the further loading operation is carried out in such a way that an actual load distribution (21) of the wagon (1) is approximated to a target load distribution thereof.

**7.** A method according to claim 6 **characterised in that** the target load distribution is dependent on a selected loading strategy.

**8.** A method according to one of claims 5 to 7 **characterised in that** for that purpose at least one operating parameter of the wagon (1) or at least one operating parameter of a harvesting vehicle (14) which is loading the wagon (1) is adapted.

**9.** A method according to claim 7 **characterised in that** a travel speed of the wagon (1) is adapted and/or a transport device (6) of the load space (5) of the wagon (1) is actuated.

**10.** A method according to claim 7 or claim 8 **characterised in that** a travel speed of a harvesting vehicle (14) which is loading the wagon (1) is adapted and/or a discharge spout (17) of the harvesting vehicle (14) which is loading the wagon (1) is actuated.

**11.** A control apparatus for operating an agricultural wagon (1) **characterised by** means for carrying out the method according to one of claims 1 to 10.

**Revendications**

**1.** Procédé pour exploiter une remorque agricole (1), pendant une opération de chargement de la remorque (1) un espace de chargement (5) de la remorque (1) étant chargé avec du produit récolté, et pendant l'opération de chargement une masse du produit récolté reçu dans l'espace de chargement (5) de la remorque (1) et une répartition du produit récolté dans l'espace de chargement (5), c'est-à-dire une répartition de chargement réelle (21), étant déterminées, et le chargement ultérieur de la remorque autochargeuse (1) étant réalisé en fonction de cela, **caractérisé en ce que**, à partir de la masse (Δm) de produit récolté ajoutée dans l'espace de chargement (5) entre deux moments t1 et t2 et de la position du centre de gravité de la masse ajoutée (Δm), la répartition de chargement réelle de la remorque (1) est déterminée au moins sur la direction longitudinale de la remorque (1) par le fait que la masse (Δm) du produit récolté reçu dans l'espace de chargement (5) ainsi que la position du centre de gravité en cours de formation de la masse reçue (Δm) sont déterminées à partir de signaux de mesure d'au moins deux capteurs (17, 18) disposés en étant répartis au moins sur la direction longitudinale de la remorque (1), et les masses (Δm) ainsi que leur position relative par rapport à l'un (18) des capteurs étant totalisées en fonction du temps.

**2.** Procédé selon la revendication 1, **caractérisé en ce que** la masse du produit récolté dans l'espace de chargement (1) de la remorque (1) et la répartition du produit récolté dans l'espace de chargement (5) sont détectées de manière cyclique ou continue pendant l'opération de chargement.

**3.** Procédé selon une des revendications 1 à 2, **caractérisé en ce que** la répartition de chargement réelle de la remorque (1) ou une grandeur dépendant de la répartition de chargement réelle, respectivement une grandeur définissant celle-ci, sont affichées automatiquement.

**4.** Procédé selon une des revendications 1 à 3, **caractérisé en ce que** sur la remorque (1) est prévu un affichage (20) qui permet de visualiser la répartition de chargement réelle (21) de la remorque (1) ou d'afficher à chaque instant dans quelle zone de l'espace de chargement (5) du produit récolté doit être amené.

**5.** Procédé selon une des revendications 1 à 4, **caractérisé en ce que** l'opération de chargement ultérieure est adaptée en fonction de la masse de produit récolté détectée dans la remorque (1) pendant l'opération de chargement et en fonction de la répartition de chargement réelle (21) de la remorque (1).

**6.** Procédé selon la revendication 5, **caractérisé en ce que** l'opération de chargement ultérieure est réalisée de façon qu'une répartition de chargement réelle (21) de la remorque (1) se rapproche d'une répartition de chargement de consigne de celle-ci.

**7.** Procédé selon la revendication 6, **caractérisé en ce que** la répartition de chargement de consigne est fonction d'une stratégie de chargement choisie.

**8.** Procédé selon une des revendications 5 à 7, **caractérisé en ce qu'**à cet effet au moins un paramètre d'exploitation de la remorque (1) ou au moins un paramètre d'exploitation d'un véhicule de récolte (14) chargeant la remorque (1) est adapté.

**9.** Procédé selon la revendication 7, **caractérisé en ce qu'**une vitesse de marche de la remorque (1) est adaptée et/ou un équipement de transport (6) de l'espace de chargement (5) de la remorque (1) est actionné.

**10.** Procédé selon la revendication 7 ou 8, **caractérisé en ce qu'**une vitesse de marche d'un véhicule de récolte (14) chargeant la remorque (1) est adaptée et/ou une goulotte (17) du véhicule de récolte (14) chargeant la remorque (1) est actionnée.

**11.** Équipement de commande pour exploiter une remorque agricole (1), **caractérisé par** des moyens pour mettre en oeuvre le procédé selon une des revendications 1 à 10.

**Fig. 1**

**Fig. 2**

$\Delta m*g$

**Fig. 3**

00100

**Fig. 4**

**EP 3 095 315 B1**

**IN DER BESCHREIBUNG AUFGEFÜHRTE DOKUMENTE**

**In der Beschreibung aufgeführte Patentdokumente**

- US 20130211658 A1
- US 20140284118 A1
- DE 4122024 A1
- DE 102004011789 A1